# EUROPEAN PATENT APPLICATION

(11) **EP 4 790 368 A1**
(43) Date of publication of application: **12.08.2026**
(21) Application number: 25221888.8
(22) Date of filing: 09.12.2025
(51) Int. Cl.: G01F 1/667, G01F 25/10

(54) **APPARATUS AND METHOD FOR MONITORING FLUID FLOW**

(30) Priority: 10.02.2025 US 202519049536
(71) Applicant: General Electric Company, Evendale, Ohio 45215 (US)
(72) Inventor: ANDARAWIS, Emad Andarawis, Niskayuna, 12309 (US); WALLACE, Kirk Dennis, Niskayuna, 12309 (US); REEPMEYER, James Ryan, Evendale, 45215 (US); MCGUIGAN, Samantha Marie, Niskayuna, 12309 (US); BELLOFATTO, Dominick, Evendale, 45215 (US)
(74) Representative: Openshaw & Co.

(57) **Abstract**

An apparatus for monitoring fluid flow includes a computing system configured to the control the operation of a first transceiver-based sensor such that the first transceiver-based sensor emits a downstream sensor signal directed at a third transceiver-based sensor and a fourth transceiver-based sensor. Furthermore, the computing system is configured to control the operation of the third transceiver-based sensor such that the third transceiver-based sensor emits an upstream sensor signal directed at the first transceiver-based sensor and a second transceiver-based sensor. Additionally, the computing system is configured to determine redundant values of a flow parameter of the fluid based on the downstream sensor signal and the upstream sensor signal.

## Description

### FIELD

The present disclosure is related to monitoring fluid flow and, more specifically, to apparatuses and methods for monitoring fluid flow, such as in connection with the operation of a gas turbine engine.

### BACKGROUND

It is generally necessary to monitor or otherwise measure the flow rates of fluids in certain systems to control and/or ensure the proper functioning of such systems. For example, it is important to accurately monitor the flow rate of fuel being delivered to a gas turbine engine to properly control the engine. In this respect, many fuel flow monitoring systems rely on transceiver-based sensors (e.g., ultrasonic sensors) due to their accuracy and non-obtrusive operation.

In certain applications, such as those in the aviation and aerospace fields, it is important to build redundancies into the fluid flow monitoring systems being used. For example, in a fuel flow monitoring system for a gas turbine engine used on an aircraft, two sets of transceiver-based sensors may be used to monitor the same fuel flow to provide the desired redundancy. However, the inherent operational characteristics of transceiver-based sensors create certain challenges when using several transceiver-based sensors close to each other.

### BRIEF DESCRIPTION OF THE DRAWINGS

A full and enabling disclosure of the present disclosure, including the best mode thereof, directed to one of ordinary skill in the art, is set forth in the specification, which refers to the appended figures, in which:
FIG. 1 is a schematic cross-sectional view of one embodiment of a gas turbine engine in accordance with aspects of the present disclosure.
FIG. 2 is a diagrammatic view of one embodiment of an apparatus for monitoring fluid flow in accordance with aspects of the present disclosure.
FIG. 3 is a flow diagram providing one embodiment of control logic for monitoring fluid flow in accordance with aspects of the present subject matter.
FIG. 4 is a flow diagram providing another embodiment of control logic for monitoring fluid flow in accordance with aspects of the present subject matter.
FIG. 5 is a flow diagram of one embodiment of a method for monitoring fluid flow in accordance with aspects of the present subject matter.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The singular forms "a", "an", and "the" include plural references unless the context dictates otherwise.

The term "at least one of" in the context of, e.g., "at least one of A, B, and C" refers to only A, only B, only C, or any combination of A, B, and C.

The terms "coupled," "fixed," "attached to," and the like refer to both direct coupling, fixing, or attaching, as well as indirect coupling, fixing, or attaching through one or more intermediate components or features unless otherwise specified herein.

As used herein, the terms "first," "second," and "third" may be used interchangeably to distinguish one component from another and are not intended to signify the location or importance of the individual components.

For purposes of the description hereinafter, the terms "upper," "lower," "right," "left," "vertical," "horizontal," "top," "bottom," "lateral," "longitudinal," and derivatives thereof shall relate to the embodiments as they are oriented in the drawing figures. However, it is to be understood that the embodiments may assume various alternative variations, except where expressly specified to the contrary. It is also to be understood that the specific devices illustrated in the attached drawings, and described in the following specification, are simply exemplary embodiments of the disclosure. Hence, specific dimensions and other physical characteristics related to the embodiments disclosed herein are not to be considered limiting.

The term "turbomachine" refers to a machine including one or more compressors, a heat-generating section (e.g., a combustion section), and one or more turbines that together generate a torque output.

The term "gas turbine engine" refers to an engine having a turbomachine as all or a portion of its power source. Example gas turbine engines include turbofan engines, turboprop engines, turbojet engines, turboshaft engines, etc., as well as hybrid-electric versions of one or more of these engines.

The term "combustion section" refers to any heat addition system for a turbomachine. For example, the term combustion section may refer to a section including one or more of a deflagrative combustion assembly, a rotating detonation combustion assembly, a pulse detonation combustion assembly, or another appropriate heat addition assembly. In certain example embodiments, the combustion section may include an annular combustor, a can combustor, a cannular combustor, a trapped vortex combustor (TVC), or other appropriate combustion system, or combinations thereof.

The terms "low" and "high", or their respective comparative degrees (e.g., -er, where applicable), when used with a compressor, a turbine, a shaft, or spool components, etc. each refer to relative speeds within an engine unless otherwise specified. For example, a "low turbine" or "low-speed turbine" defines a component configured to operate at a rotational speed, such as a maximum allowable rotational speed, lower than a "high turbine" or "high-speed turbine" of the engine.

The terms "forward" and "aft" refer to relative positions within a gas turbine engine or vehicle, and are based on a normal operational attitude of the gas turbine engine or vehicle. More particularly, forward and aft are used herein with reference to the direction of travel of the vehicle and the direction of propulsive thrust of the gas turbine engine.

The terms "upstream" and "downstream" refer to the relative direction with respect to fluid flow in a fluid pathway. For example, "upstream" refers to the direction from which the fluid flows, and "downstream" refers to the direction in which the fluid flows.

As used herein, the terms "axial" and "axially" refer to directions and orientations that extend substantially parallel to a centerline of the gas turbine engine. Moreover, the terms "radial" and "radially" refer to directions and orientations that extend substantially perpendicular to the centerline of the gas turbine engine. In addition, as used herein, the terms "circumferential" and "circumferentially" refer to directions and orientations that extend arcuately about the centerline of the gas turbine engine.

In general, the present subject is directed to a system and a method for monitoring a fluid flow, such as a fuel flow being delivered to a gas turbine engine. As will be described below, the apparatus includes a fluid conduit defining a flow passage through which a fluid flows. For example, in some embodiments, the fluid conduit may be a fuel conduit or line (e.g., of a gas turbine engine) through which fuel flows. Furthermore, the apparatus includes an upstream sensor assembly and a downstream sensor assembly associated with the fluid conduit. More specifically, the upstream sensor assembly includes first and second transceiver-based sensors (e.g., first and second ultrasonic sensors). Moreover, the downstream sensor assembly includes third and fourth transceiver-based sensors (e.g., third and fourth ultrasonic sensors).

Additionally, a computing system of the disclosed apparatus is configured to determine redundant values of a flow parameter of the fluid flowing through the flow passage based on data generated by the first, second, third, and/or fourth transceiver-based sensors. More specifically, the computing system is configured to control the operation of the first transceiver-based sensor such that the first transceiver-based sensor emits a downstream sensor signal directed at the third transceiver-based sensor and the fourth transceiver-based sensor. Furthermore, the computing system is configured to control the operation of the third transceiver-based sensor such that the third transceiver-based sensor emits an upstream sensor signal directed at the first transceiver-based sensor and the second transceiver-based sensor. Thereafter, the computing system is configured to determine redundant values of the flow parameter based on the downstream sensor signal and the upstream sensor signal.

In some embodiments, the downstream sensor signal corresponds to a first downstream sensor signal and the upstream sensor signal corresponds to a first upstream sensor signal, each having a first signal parameter value (e.g., a first waveform). In such embodiments, the computing system controls the operation of the second transceiver-based sensor such that the second transceiver-based sensor emits a second downstream sensor signal having a second signal parameter value (e.g., a second waveform) directed at the third transceiver-based sensor and the fourth transceiver-based sensor, with the second signal parameter value being different than the first signal parameter value. Alternatively, the first and second waveforms may be the same but emitted at different times. In this respect, the computing system receives first data from the third transceiver-based sensor, with the first data being associated with the first downstream sensor signal and the second downstream sensor signal received by the third transceiver-based sensor. Thereafter, the computing system filters out portions of the first data associated with the second downstream sensor signal and determines the time-of-flight of the first downstream sensor signal based on the remaining portion of the first data. Similarly, the computing system receives second data from the fourth transceiver-based sensor, with the second data being associated with the first downstream sensor signal and the second downstream sensor signal received by the fourth transceiver-based sensor. Thereafter, the computing system filters out portions of the second data associated with the first downstream sensor signal and determines the time-of-flight of the second downstream sensor signal based on the remaining portion of the second data. Moreover, the computing system is further configured to control the operation of the fourth transceiver-based sensor such that the fourth transceiver-based sensor emits a second upstream sensor signal having the second signal parameter value directed at the first transceiver-based sensor and the second transceiver-based sensor. The first and second upstream sensor signals are processed similarly to the first and second downstream sensor signals. Thereafter, the computing system determines a first value of the flow parameter based on the determined times-of-flight of the first downstream and upstream sensor signals. Additionally, the computing system determines a second value of the flow parameter based on the determined times-of-flight of the second downstream and upstream sensor signals.

In other embodiments, the computing system uses a single downstream sensor signal and a single downstream sensor signal to determine the redundant values. More specifically, the computing system receives first data from the third transceiver-based sensor, with the first data being associated with the downstream sensor signal. Furthermore, the computing system determines a first time-of-flight of the downstream sensor signal based on the first data. Additionally, the computing system receives second data from the fourth transceiver-based sensor, with the second data being associated with the downstream sensor signal. Moreover, the computing system determines a second time-of-flight of the downstream sensor signal based on the first data. Similarly, the computing system receives third data from the first transceiver-based sensor, with the third data being associated with the upstream sensor signal. Furthermore, the computing system determines a first time-of-flight of the upstream sensor signal based on the third data. Additionally, the computing system receives fourth data from the second transceiver-based sensor, with the fourth data being associated with the upstream sensor signal. Moreover, the computing system determines a second time-of-flight of the upstream sensor signal based on the first data. Thereafter, the computing system determines a first value of the flow parameter based on the determined first time-of-flight of the downstream sensor signal and the determined first time-of-flight of the upstream sensor signal. Moreover, the computing system determines a second value of the flow parameter based on the determined second time-of-flight of the downstream sensor signal and the determined second time-of-flight of the upstream sensor signal.

Determining redundant values of a flow parameter using sensor data generated by the first, second, third, and fourth transceiver-based sensors as described above improves the operation of the gas turbine engine. More specifically, in certain applications (e.g., aviation and aerospace applications), it is necessary to have redundant fluid flow sensors. For example, the first and third transceiver-based sensors may operate together to capture data for determining one flow measurement. Similarly, the second and fourth transceiver-based sensors may operate together to capture data for determining another flow measurement (e.g., a redundant flow measurement). In some embodiments of the disclosed apparatus and method, multiple sensor signals having different signal parameter values (e.g., a first downstream sensor signal having a first signal parameter value and a second downstream sensor signal having a different, second signal parameter value) can be emitted at the same time. In other embodiments, a single sensor signal can be received by two different transceiver-based sensors (e.g., a single downstream signal can be received by the first and second transceiver-based sensors). As such, the disclosed apparatus and method allow for redundant values of a flow parameter of a fluid to be determined for the same portion of the flow passage at the same rate as a non-redundant system. Thus, the disclosed apparatus and method allow for redundant flow measurement in applications in which redundancy is important (e.g., aerospace and aviation applications) without reducing the sampling rate of the flow measurements, which could result in less efficient control of the gas turbine engine.

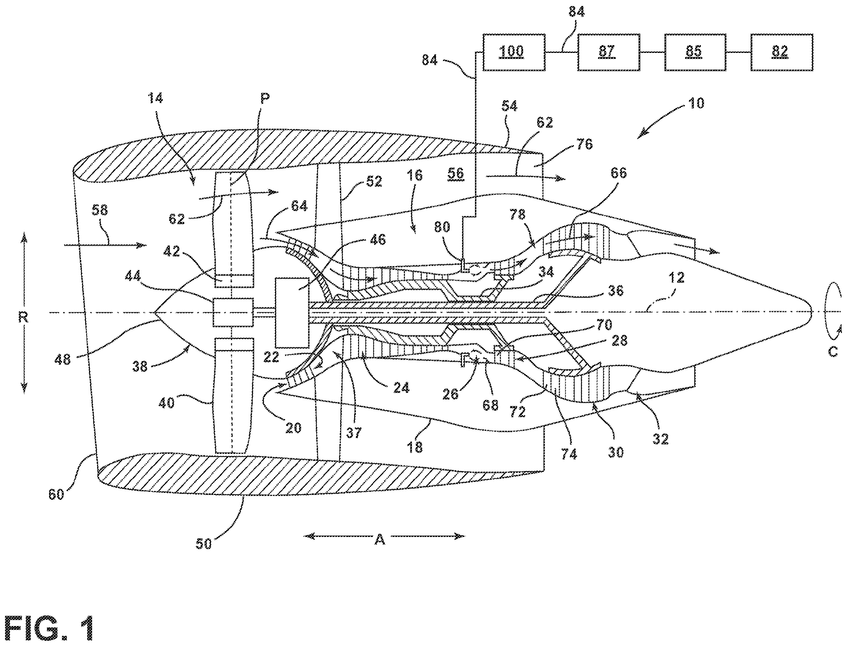

Referring now to the drawings, wherein identical numerals indicate the same elements throughout the figures, FIG. 1 is a schematic cross-sectional view of one embodiment of a gas turbine engine 10. More specifically, in the illustrated embodiment, the gas turbine engine 10 is a high-bypass turbofan jet engine, sometimes also referred to as a "turbofan engine." As shown in FIG. 1, the gas turbine engine 10 defines an axial direction A (extending parallel to a longitudinal centerline 12 provided for reference), a radial direction R, and a circumferential direction C extending about the longitudinal centerline 12. In general, the gas turbine engine 10 includes a fan section 14 and a turbomachine 16 disposed downstream of the fan section 14.

The turbomachine 16 generally includes a substantially tubular outer casing 18 that defines an annular inlet 20. The outer casing 18 encases, in serial flow relationship, a compressor section including a booster or low pressure (LP) compressor 22 and a high pressure (HP) compressor 24; a combustion section 26; a turbine section including a high pressure (HP) turbine 28 and a low pressure (LP) turbine 30; and a jet exhaust nozzle section 32. A high-pressure (HP) shaft 34 (which may additionally or alternatively be a spool) drivingly connects the HP turbine 28 to the HP compressor 24. A low-pressure (LP) shaft 36 (which may additionally or alternatively be a spool) drivingly connects the LP turbine 30 to the LP compressor 22. The compressor section, the combustion section 26, the turbine section, and the jet exhaust nozzle section 32 together define a working gas flow path 37.

In the illustrated embodiment, the fan section 14 includes a fan 38 having a plurality of fan blades 40 coupled to a disk 42 in a spaced apart manner. As depicted, the fan blades 40 extend outwardly from disk 42 generally along the radial direction R. Each fan blade 40 is rotatable relative to the disk 42 about a pitch axis P by the fan blades 40 being operatively coupled to a suitable pitch change mechanism 44 configured to collectively vary the pitch of the fan blades 40, e.g., in unison. The gas turbine engine 10 further includes a power gearbox 46, and the fan blades 40, disk 42, and pitch change mechanism 44 are together rotatable about the longitudinal centerline 12 by LP shaft 36 across the power gearbox 46. The power gearbox 46 includes a plurality of gears for adjusting the rotational speed of the fan 38 relative to the rotational speed of the LP shaft 36, such that the fan 38 may rotate at a more efficient fan speed.

Referring still to FIG. 1, the disk 42 is covered by rotatable front hub 48 of the fan section 14 (sometimes also referred to as a "spinner"). The front hub 48 is aerodynamically contoured to promote airflow through the plurality of fan blades 40.

Additionally, the exemplary fan section 14 includes an annular fan casing or outer nacelle 50 that circumferentially surrounds the fan 38 and/or at least a portion of the turbomachine 16. It should be appreciated that the nacelle 50 is supported relative to the turbomachine 16 by a plurality of circumferentially spaced outlet guide vanes 52 in the embodiment depicted. Moreover, a downstream section 54 of the nacelle 50 extends over an outer portion of the turbomachine 16 to define a bypass airflow passage 56 therebetween.

During the operation of the gas turbine engine 10, a volume of air 58 enters the gas turbine engine 10 through an associated inlet 60 of the nacelle 50 and fan section 14. As the volume of air 58 passes across the fan blades 40, a first portion of air 62 is directed or routed into the bypass airflow passage 56, and a second portion of air 64 as indicated by arrow 64 is directed or routed into the working gas flow path 37, or more specifically into the LP compressor 22. The ratio between the first portion of air 62 and the second portion of air 64 is commonly known as a bypass ratio.

The pressure of the second portion of air 64 is then increased as it is routed through the HP compressor 24 and into the combustion section 26 for use in the combustion process. More specifically, the fuel may be supplied to one or more fuel nozzles 80 within the combustion section 26 from one or more fuel tanks 82 via one or more fuel lines or conduits 84, a pump 85, and valve 87. The fuel delivered to the combustion section 26 by the fuel nozzle(s) 80 mixes within the second portion of air 64. This air-fuel mixture is then combusted or otherwise burned to produce combustion gases 66. For example, as will be described below, an apparatus 100 for monitoring fluid flow may be positioned downstream of the pump 85 and/or the valve 87. The apparatus 100, in turn, may be used as part of a closed-loop feedback control system for the pump 85 and/or the valve 87.

Thereafter, the combustion gases 66 are routed through the HP turbine 28 where a portion of thermal and/or kinetic energy from the combustion gases 66 is extracted via sequential stages of HP turbine stator vanes 68 that are coupled to the outer casing 18 and HP turbine rotor blades 70 that are coupled to the HP shaft 34, thus causing the HP shaft 34 to rotate, supporting operation of the HP compressor 24. The combustion gases 66 are then routed through the LP turbine 30 where a second portion of thermal and kinetic energy is extracted from the combustion gases 66 via sequential stages of LP turbine stator vanes 72 that are coupled to the outer casing 18 and LP turbine rotor blades 74 that are coupled to the LP shaft 36, thus causing the LP shaft 36 to rotate, supporting operation of the LP compressor 22 and/or rotation of the fan 38.

The combustion gases 66 are subsequently routed through the jet exhaust nozzle section 32 of the turbomachine 16 to provide propulsive thrust. Simultaneously, the pressure of the first portion of air 62 is substantially increased as the first portion of air 62 is routed through the bypass airflow passage 56 before it is exhausted from a fan nozzle exhaust section 76 of the gas turbine engine 10, also providing propulsive thrust. The HP turbine 28, the LP turbine 30, and the jet exhaust nozzle section 32 at least partially define a hot gas path 78 for routing the combustion gases 66 through the turbomachine 16.

The gas turbine engine 10 depicted in FIG. 1 is by way of example only, and in other embodiments, the gas turbine engine 10 may have any other suitable configuration. For example, although the gas turbine engine 10 depicted is configured as a ducted gas turbine engine (i.e., including the outer nacelle 50), in other embodiments, the gas turbine engine 10 may be an unducted gas turbine engine (such that the fan 38 is an unducted fan, and the outlet guide vanes 52 are cantilevered from the outer casing 18). Additionally, or alternatively, although the gas turbine engine 10 depicted is configured as a geared gas turbine engine (i.e., including the power gearbox 46) and a variable pitch gas turbine engine (i.e., including a fan 38 configured as a variable pitch fan), in other embodiments, the gas turbine engine 10 may additionally or alternatively be configured as a direct drive gas turbine engine (such that the LP shaft 36 rotates at the same speed as the fan 38), as a fixed pitch gas turbine engine (such that the fan 38 includes fan blades 40 that are not rotatable about a pitch axis P), or both. Furthermore, in still other exemplary embodiments, aspects of the present disclosure may be incorporated into any other suitable gas turbine engine. For example, in other exemplary embodiments, aspects of the present disclosure may (as appropriate) be incorporated into, e.g., a turboprop gas turbine engine, a turboshaft gas turbine engine, or a turbojet gas turbine engine.

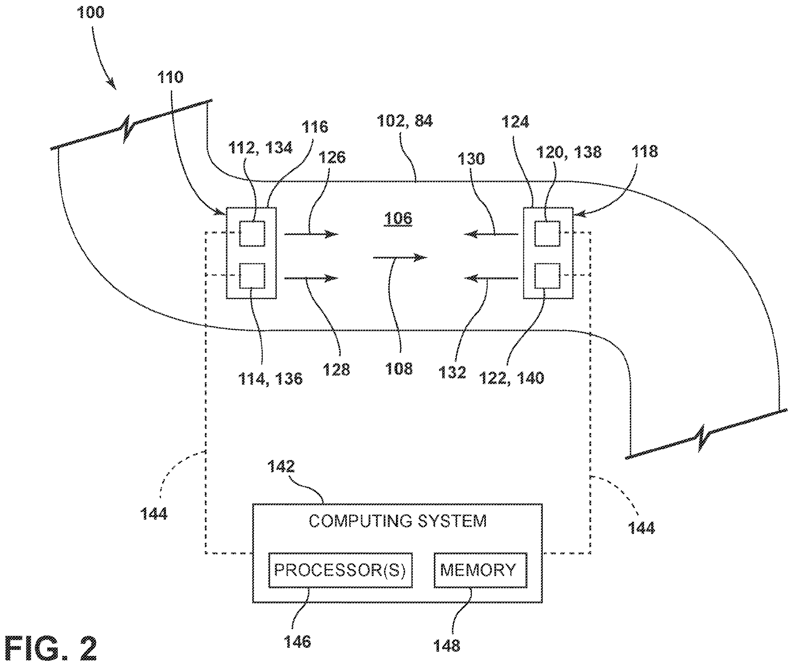

Referring now to FIG. 2, a diagrammatic view of one embodiment of an apparatus 100 for monitoring fluid flow is illustrated in accordance with aspects of the present subject matter. In general, the apparatus 100 will be described herein with reference to the gas turbine engine 10 described above with reference to FIG. 1. However, it should be appreciated by those of ordinary skill in the art that the disclosed apparatus 100 may generally be utilized with gas turbine engine having any other suitable engine configuration and with any other suitable application outside of gas turbine engine.

As shown in FIG. 2, the apparatus 100 includes a fluid conduit 102 defining a flow passage 106 through which a fluid flows in a direction of flow 108. For example, in the illustrated embodiment, the fluid conduit 102 may be one of the fuel conduits 84 that supply fuel to the gas turbine engine 10. In such an embodiment, the fuel flow through the flow passage 106 from the fuel tank(s) 82 (FIG. 1) in the direction of flow 108 to the fuel nozzle(s) 80 (FIG. 1). However, in alternative embodiments, the fluid conduit 102 may be configured to convey any other suitable type of fluid, such as oil, coolant, sCO₂, or the like.

The fluid flowing through the fluid conduit 102 may be a liquid, a gas, or a mixture thereof.

Furthermore, the apparatus 100 includes an upstream sensor assembly 110 associated with the flow passage 106. In some embodiments, the upstream sensor assembly 110 may be positioned within the flow passage 106 such that the upstream sensor assembly 110 is in direct contact with the fluid flow through the flow passage 106. Alternatively, the upstream sensor assembly 110 may be buffered from the fluid flow through the flow passage 106 via a buffer rod (not show) or other suitable mechanism. As shown, the upstream sensor assembly 110 includes a first transceiver-based sensor 112 and a second transceiver-based sensor 114. In some embodiments, the first and second transceiver-based sensors 112, 114 may be positioned within a housing 116. That is, in such embodiments, the first and second transceiver-based sensors 112, 114 may be positioned within the same housing. However, in other embodiments, the first and second transceiver-based sensors 112, 114 may be positioned within different housings.

Additionally, the apparatus 100 includes a downstream sensor assembly 118 associated with the flow passage 106 downstream of the upstream sensor assembly 110 relative to a direction of flow 108 of the fluid through the flow passage 106. In some embodiments, the downstream sensor assembly 118 may be positioned within the flow passage 106 such that the downstream sensor assembly 118 is in direct contact with the fluid flow through the flow passage 106. Alternatively, the downstream sensor assembly 118 may be buffered from the fluid flow through the flow passage 106 via buffer rod (not show) or other suitable mechanism. As shown, the downstream sensor assembly 118 includes a third transceiver-based sensor 120 and a fourth transceiver-based sensor 122. For example, in some embodiments, the first and third transceiver-based sensors 112, 120 may operate together to capture data for use in determining a first value of a flow parameter associated with the fluid flowing through the flow passage 106 (e.g., the flow rate). Similarly, in such embodiments, the second and fourth transceiver-based sensors 114, 122 may operate together to capture data for use in determining a second value of the flow parameter (e.g., a redundant value). However, in other embodiments, different groups and/or number of the first, second, third, and/or fourth transceiver-based sensors 112, 114, 120, 122 may operate together to the values of the flow parameter. In some embodiments, the third and fourth transceiver-based sensors 120, 122 may be positioned within a housing 124. That is, in such embodiments, the third and fourth transceiver-based sensors 120, 122 may be positioned within the same housing. However, in other embodiments, the third and fourth transceiver-based sensors 120, 122 may be positioned within different housings.

In general, the first, second, third, and fourth transceiver-based sensors 112, 114, 120, 122 are configured to emit sensor signals through the fluid. The time-of-flight (TOF) of these signals is used to determine the values of the redundant flow measurements. As used herein, the "time-of-flight" or TOF is the amount time elapsing between the emission of a signal from on the transceiver-based sensors and the receipt of such signal by another of the transceiver-based sensors. More specifically, in several embodiments, the first transceiver-based sensor 112 is configured to emit a first sensor signal 126. For example, the TOF of the first sensor signal 126 may be the time between when the first transceiver-based sensor 112 emits the first sensor signal 126 and when the third transceiver-based sensor 120 receives the first sensor signal 126. Moreover, the second transceiver-based sensor 114 is configured to emit a second sensor signal 128. For example, the TOF of the second sensor signal 128 may be the time between when the second first transceiver-based sensor 114 emits the second sensor signal 128 and when the fourth transceiver-based sensor 122 receives the second sensor signal 128. In addition, the third transceiver-based sensor 120 is configured to emit a third sensor signal 130. For example, the TOF of the third sensor signal 130 may be the time between when the third first transceiver-based sensor 120 emits the third sensor signal 130 and when the first transceiver-based sensor 112 receives the third sensor signal 130. Furthermore, the fourth transceiver-based sensor 122 is configured to emit a fourth sensor signal 132. For example, the TOF of the fourth sensor signal 132 may be the time between when the fourth first transceiver-based sensor 122 emits the fourth sensor signal 132 and when the second transceiver-based sensor 114 receives the fourth sensor signal 132.

The first, second, third, and fourth transceiver-based sensors 112, 114, 120, 122 may be configured as any suitable type of sensors or sensing devices configured to operate as described above. For example, in several embodiments, the first, second, third, and fourth transceiver-based sensors 112, 114, 120, 122 may be respectively configured as first, second, third, and fourth ultrasonic sensors 134, 136, 138, 140. In such embodiments, the first ultrasonic sensor 134 is configured to emit a first ultrasonic signal, the second ultrasonic sensor 136 is configured to emit a second ultrasonic signal, the third ultrasonic sensor 138 is configured to emit a third ultrasonic signal, and the fourth ultrasonic sensor 140 is configured to emit a fourth ultrasonic signal.

Moreover, the apparatus 100 includes a computing system 142 communicatively coupled to one or more components of the apparatus 100 to allow the operation of such components to be electronically or automatically controlled by the computing system 142. For instance, the computing system 142 may be communicatively coupled to the first, second, third, and fourth transceiver-based sensors 112, 114, 120, 122 via a communicative link 144. As such, the computing system 142 may be configured to receive data from t the first, second, third, and fourth transceiver-based sensors 112, 114, 120, 122, which is indicative of the times of flight of the first, second, third, and fourth sensor signals 126, 128, 130, 132. In addition, the computing system 142 may be communicatively coupled to any other suitable components of the apparatus 100.

In general, the computing system 142 may include one or more processor-based devices, such as a given controller or computing device or any suitable combination of controllers or computing devices. Thus, in several embodiments, the computing system 142 may include one or more processor(s) 146 and associated memory device(s) 148 configured to perform a variety of computer-implemented functions. As used herein, the term "processor" refers not only to integrated circuits referred to in the art as being included in a computer, but also refers to a controller, a microcontroller, a microcomputer, a programmable logic circuit (PLC), an application specific integrated circuit, and other programmable circuits. Additionally, the memory device(s) 148 of the computing system 142 may generally include memory element(s) including, but not limited to, a computer-readable medium (e.g., random access memory RAM)), a computer-readable non-volatile medium (e.g., a flash memory), a floppy disk, a compact disk-read only memory (CD-ROM), a magnetooptical disk (MOD), a digital versatile disk (DVD) and/or other suitable memory elements. Such memory device(s) 148 may generally be configured to store suitable computer-readable instructions that, when implemented by the processor(s) 146, configure the computing system 142 to perform various computer-implemented functions, such as one or more aspects of the methods and algorithms that will be described herein. In addition, the computing system 142 may also include various other suitable components, such as a communications circuit or module, one or more input/output channels, a data/control bus, and/or the like.

The various functions of the computing system 142 may be performed by a single processor-based device or may be distributed across any number of processor-based devices, in which instance such devices may be considered to form part of the computing system 142. For instance, the functions of the computing system 142 may be distributed across multiple application-specific controllers or computing devices, such as a fuel system controller, an engine controller, one or more controllers on the various transceiver-based sensors, and/or the like.

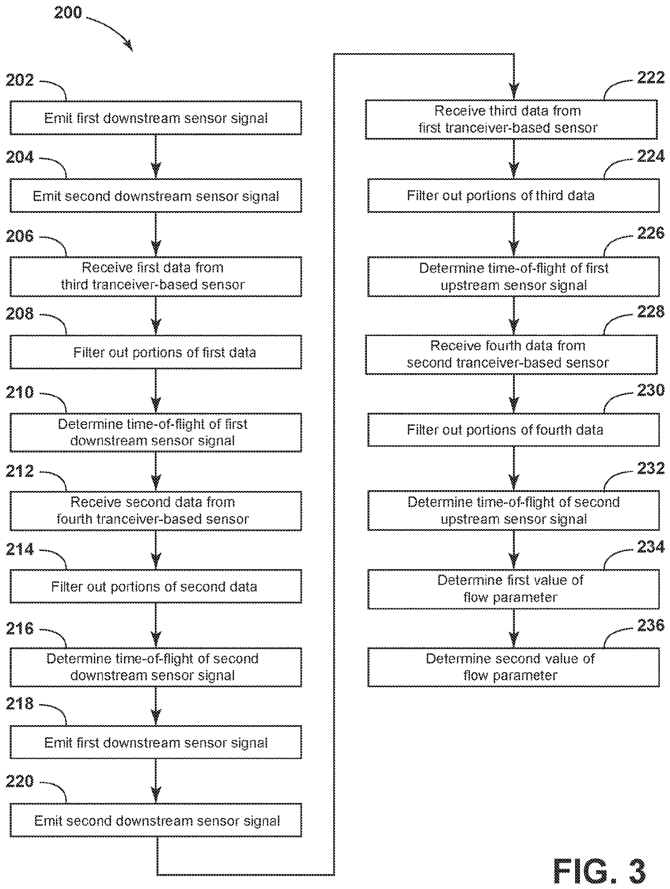

Referring now to FIG. 3, a flow diagram of one embodiment of example control logic 200 that may be executed by the computing system 142 (or any other suitable computing system) for monitoring fluid flow is illustrated in accordance with aspects of the present subject matter. Specifically, the control logic 200 shown in FIG. 3 is representative of steps of one embodiment of an algorithm that can be executed to monitor fluid flow in a manner that improves the accuracy and precision of the flow measurements. Specifically, the control logic 200 may be advantageously utilized in association with the apparatus 100 to allow for redundant monitoring fluid flow. For example, in some embodiments, the control logic 200, when implemented on the apparatus 100, allows the redundant flow measurement to be taken on the same volume of fuel flowing through the fuel line 84 of a gas turbine engine 10. That is, the apparatus 100 and the control logic 200 allow redundant transceiver-based (e.g., ultrasonic) measurement of flow parameters (e.g., flow rate) of the same volume of fuel.

As shown, at (202), the control logic 200 includes controlling the operation of a first transceiver-based sensor such that the first transceiver-based sensor emits a first downstream sensor signal directed at a third transceiver-based sensor and a fourth transceiver-based sensor. Specifically, in several embodiments, the computing system 142 is configured to control the operation of the first transceiver-based sensor 112 such that the first transceiver-based sensor 112 emits a first downstream sensor signal (e.g., the first sensor signal 126) directed at the third transceiver-based sensor 120 and the fourth transceiver-based sensor 122. The first downstream sensor signal, in turn, has a first signal parameter value, such as a first waveform. As used herein, a "waveform" is a signal having a particular parameter or collection of parameters (e.g., frequency, amplitude, period, shape, etc.) of a period of time. Such parameters may be constant over time (e.g., a particular frequency) or vary over time (e.g., a signature having an arbitrary grouping of frequency, amplitude, period, and shape over of given time period). Thus, a waveform can be any suitable signal that can be identified via a filter(s).

Furthermore, at (204), the control logic 200 includes controlling the operation of a second transceiver-based sensor such that the second transceiver-based sensor emits a second downstream sensor signal directed at the third transceiver-based sensor and the fourth transceiver-based sensor. Specifically, in several embodiments, the computing system 142 is configured to control the operation of the second transceiver-based sensor 114 such that the second transceiver-based sensor 114 emits a second downstream sensor signal (e.g., the second sensor signal 128) directed at the third transceiver-based sensor 120 and the fourth transceiver-based sensor 122. The second downstream sensor signal, in turn, has a second signal parameter value, such as a second waveform. In some embodiments, the second signal parameter value is different than the first signal parameter value. For example, in one embodiment, the first signal parameter value may be an arbitrary waveform and the second signal parameter value may be a different arbitrary waveform. Thus, the first and second downstream sensor signals could be multiple, varying, unique, and/or the like. Alternatively, the first and second signal parameter values could be the same.

Additionally, at (206), the control logic 200 includes receiving first data from the third transceiver-based sensor. Specifically, as mentioned above, in several embodiments, the computing system 142 is communicatively coupled to the third transceiver-based sensor 120 via the communicative link 144. In this respect, as the fluid flows through the fluid conduit 102 (e.g., during the operation of the gas turbine engine 10), the computing system 142 may receive first data from the third transceiver-based sensor 120. Such first data may, in turn, be indicative of or associated with the first downstream sensor signal and the second downstream sensor signal received by the third transceiver-based sensor 120.

Moreover, at (208), the control logic 200 includes filtering out portions of the first data associated with the second downstream sensor signal. As mentioned above, the first and second downstream sensor signals may each have different signal parameter values (e.g., different waveforms). This, in turn, allows the first and second downstream sensor signals to pass through the same volume of the fluid at the same time and still be individually identified by the receiving transceiver-based sensor. As such, in several embodiments, the computing system 142 is configured to filter out portions of the first data received at (206) that are associated with the second downstream sensor signal. For example, the computing system 142 may filter out portions of the first data received at (206) that are associated with the second downstream sensor signal using a first correlation function or matched filter. Alternatively, the first and second downstream sensor signals may have the signal parameter values (e.g., signatures) but be emitted at different such that each signal can be individually identified.

In addition, at (210), the control logic 200 includes determining a time-of-flight of the first downstream sensor signal based on the remaining portion of the first data. Specifically, in several embodiments, the computing system 142 is configured to determine the time-of-flight of the first downstream sensor signal based on the remaining portion of the first data received at (206). That is, after (208), the portion of the first data remaining is associated with the first downstream sensor signal. This is, in turn, used to determine the time-of-flight of the first downstream sensor signal.

As shown in FIG. 3, at (212), the control logic 200 includes receiving second data from the fourth transceiver-based sensor. Specifically, as mentioned above, in several embodiments, the computing system 142 is communicatively coupled to the fourth transceiver-based sensor 122 via the communicative link 144. In this respect, as the fluid flows through the fluid conduit 102 (e.g., during the operation of the gas turbine engine 10), the computing system 142 may receive second data from the fourth transceiver-based sensor 122. Such second data may, in turn, be indicative of or associated with the first downstream sensor signal and the second downstream sensor signal received by the fourth transceiver-based sensor 120.

Furthermore, at (214), the control logic 200 includes filtering out portions of the second data associated with the first downstream sensor signal. As mentioned above, the first and second downstream sensor signals may each have different signal parameter values (e.g., different waveforms). This, in turn, allows the first and second downstream sensor signals to pass through the same volume of the fluid at the same time and still be individually identified by the receiving transceiver-based sensor. As such, in several embodiments, the computing system 142 is configured to filter out portions of the second data received at (212) that are associated with the first downstream sensor signal. For example, the computing system 142 may filter out portions of the first data received at (206) that are associated with the second downstream sensor signal using a second correlation function or matched filter. Alternatively, the first and second downstream sensor signals may have the signal parameter values (e.g., signatures) but be emitted at different such that each signal can be individually identified.

Additionally, at (216), the control logic 200 includes determining a time-of-flight of the second downstream sensor signal based on the remaining portion of the second data. Specifically, in several embodiments, the computing system 142 is configured to determine the time-of-flight of the second downstream sensor signal based on the remaining portion of the second data received at (212). That is, after (214), the portion of the second data remaining is associated with the second downstream sensor signal. This is, in turn, used to determine the time-of-flight of the second downstream sensor signal.

Moreover, at (218), the control logic 200 includes controlling the operation of the third transceiver-based sensor such that the third transceiver-based sensor emits a first upstream sensor signal directed at the first transceiver-based sensor and the second transceiver-based sensor. Specifically, in several embodiments, the computing system 142 is configured to control the operation of the third transceiver-based sensor 120 such that the third transceiver-based sensor 120 emits a first upstream sensor signal (e.g., the third sensor signal 130) directed at the first transceiver-based sensor 112 and the second transceiver-based sensor 114. The first upstream sensor signal, in turn, has the first signal parameter value, such as the first waveform. For example, as mentioned above, in one embodiment, the first signal parameter value may be an arbitrary waveform and the second signal parameter value may be a different arbitrary waveform. Thus, the first and second downstream sensor signals could be multiple, varying, unique, and/or the like. Alternatively, the first and second signal parameter values could be the same.

In addition, at (220), the control logic 200 includes controlling the operation of the fourth transceiver-based sensor such that the fourth transceiver-based sensor emits a second upstream sensor signal directed at the first transceiver-based sensor and the second transceiver-based sensor. Specifically, in several embodiments, the computing system 142 is configured to control the operation of the fourth transceiver-based sensor 122 such that the fourth transceiver-based sensor 122 emits a second upstream sensor signal (e.g., the fourth sensor signal 132) directed at the first transceiver-based sensor 112 and the second transceiver-based sensor 114. The second upstream sensor signal, in turn, has the second signal parameter value, such as the second waveform. As mentioned above, the second signal parameter value is different than the first signal parameter value.

As shown in FIG. 3, at (222), the control logic 200 includes receiving third data from the first transceiver-based sensor. Specifically, as mentioned above, in several embodiments, the computing system 142 is communicatively coupled to the first transceiver-based sensor 112 via the communicative link 144. In this respect, as the fluid flows through the fluid conduit 102 (e.g., during the operation of the gas turbine engine 10), the computing system 142 may receive third data from the first transceiver-based sensor 114. Such third data may, in turn, be indicative of or associated with the first upstream sensor signal and the second upstream sensor signal received by the first transceiver-based sensor 112.

Additionally, at (224), the control logic 200 includes filtering out portions of the third data associated with the second upstream sensor signal. As mentioned above, the first and second upstream sensor signals may each have different signal parameter values (e.g., different waveforms). This, in turn, allows the first and second upstream sensor signals to pass through the same volume of the fluid at the same time and still be individually identified by the receiving transceiver-based sensor. As such, in several embodiments, the computing system 142 is configured to filter out portions of the third data received at (222) that are associated with the second upstream sensor signal. For example, the computing system 142 may filter out portions of the first data received at (206) that are associated with the second downstream sensor signal using the first correlation function or matched filter. Alternatively, the first and second upstream sensor signals may have the signal parameter values (e.g., signatures) but be emitted at different such that each signal can be individually identified.

Moreover, at (226), the control logic 200 includes determining a time-of-flight of the first upstream sensor signal based on the remaining portion of the third data. Specifically, in several embodiments, the computing system 142 is configured to determine the time-of-flight of the first upstream sensor signal based on the remaining portion of the third data received at (222). That is, after (224), the portion of the third data remaining is associated with the first downstream sensor signal. This is, in turn, used to determine the time-of-flight of the first upstream sensor signal.

In addition, at (228), the control logic 200 includes receiving fourth data from the second transceiver-based sensor. Specifically, as mentioned above, in several embodiments, the computing system 142 is communicatively coupled to the second transceiver-based sensor 114 via the communicative link 144. In this respect, as the fluid flows through the fluid conduit 102 (e.g., during the operation of the gas turbine engine 10), the computing system 142 may receive fourth data from the second transceiver-based sensor 112. Such fourth data may, in turn, be indicative of or associated with the first upstream sensor signal and the second upstream sensor signal received by the second transceiver-based sensor 114.

As shown in FIG. 3, at (230), the control logic 200 includes filtering out portions of the fourth data associated with the first upstream sensor signal. As mentioned above, the first and second upstream sensor signals may each have different signal parameter values (e.g., different frequencies). This, in turn, allows the first and second upstream sensor signals to pass through the same volume of the fluid at the same time and still be individually identified by the receiving transceiver-based sensor. As such, in several embodiments, the computing system 142 is configured to filter out portions of the fourth data received at (228) that are associated with the first upstream sensor signal. For example, the computing system 142 may filter out portions of the first data received at (206) that are associated with the second downstream sensor signal using the second correlation function or matched filter. Alternatively, the first and second upstream sensor signals may have the signal parameter values (e.g., signatures) but be emitted at different such that each signal can be individually identified.

Furthermore, at (232), the control logic 200 includes determining a time-of-flight of the second upstream sensor signal based on the remaining portion of the fourth data. Specifically, in several embodiments, the computing system 142 is configured to determine the time-of-flight of the second upstream sensor signal based on the remaining portion of the fourth data received at (228). That is, after (230), the portion of the fourth data remaining is associated with the second upstream sensor signal. This is, in turn, used to determine the time-of-flight of the second upstream sensor signal.

Additionally, at (234), the control logic 200 includes determining a first value of a flow parameter of the fluid flowing through a fluid conduit based on the determined time-of-flight of the first downstream sensor signal and the determined time-of-flight of the first upstream sensor signal. Specifically, in several embodiments, the computing system 142 is configured to determine a first value of the flow parameter (e.g., the flow rate) based on the time-of-flight of the first downstream sensor signal determined at (210) and the time-of-flight of the first upstream sensor signal determined at (226). For example, the computing system 142 may determine the first value of the flow parameter based on the difference between the times-of-flight of the first downstream sensor signal and the first upstream sensor signal. In some embodiments, the computing system 142 may use a look-up table stored within its memory device(s) 148 that correlates the difference in times-of-flight with a flow parameter value.

Moreover, at (236), the control logic 200 includes determining a second value of the flow parameter of the fluid flowing through the fluid conduit based on the determined time-of-flight of the second downstream sensor signal and the determined time-of-flight of the second upstream sensor signal. Specifically, in several embodiments, the computing system 142 is configured to determine a second value of the flow parameter (e.g., the flow rate) based on the time-of-flight of the second downstream sensor signal determined at (216) and the time-of-flight of the second upstream sensor signal determined at (232). For example, the computing system 142 may determine the second value of the flow parameter based on the difference between the times-of-flight of the second downstream sensor signal and the second upstream sensor signal. In some embodiments, the computing system 142 may use a look-up table stored within its memory device(s) 148 that correlates the difference in times-of-flight with a flow parameter value.

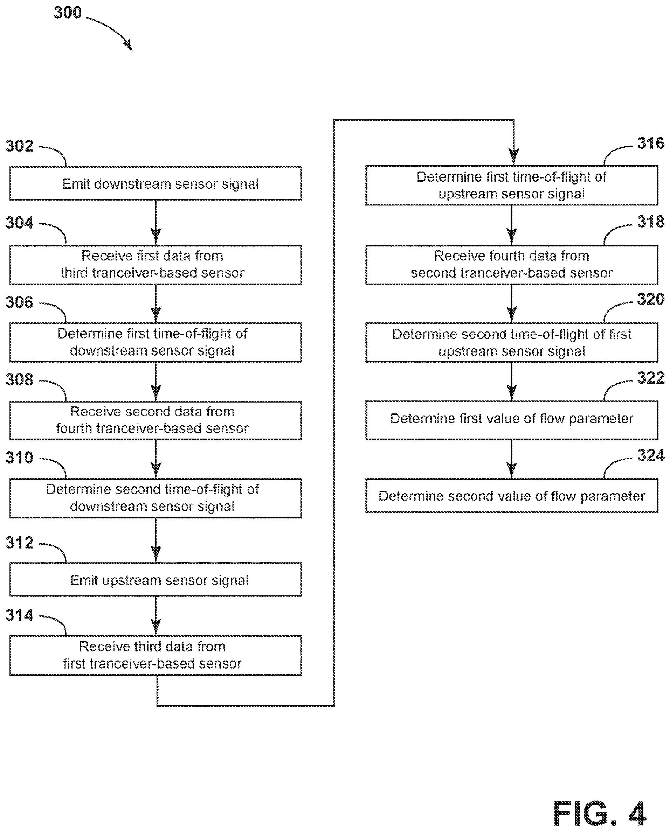

Referring now to FIG. 4, a flow diagram of another embodiment of example control logic 300 that may be executed by the computing system 142 (or any other suitable computing system) for monitoring fluid flow is illustrated in accordance with aspects of the present subject matter. Specifically, the control logic 300 shown in FIG. 4 is representative of steps of one embodiment of an algorithm that can be executed to monitor fluid flow in a manner that improves the accuracy and precision of the flow measurements. Specifically, the control logic 200 may be advantageously utilized in association with the apparatus 100 to allow for redundant monitoring fluid flow without requiring substantial computing resources and/or processing time.

As shown, at (302), the control logic 300 includes controlling the operation of a first transceiver-based sensor such that the first transceiver-based sensor emits a downstream sensor signal directed at a third transceiver-based sensor and a fourth transceiver-based sensor. Specifically, in several embodiments, the computing system 142 is configured to control the operation of the first transceiver-based sensor 112 such that the first transceiver-based sensor 112 emits a downstream sensor signal (e.g., the first sensor signal 126) directed at the third transceiver-based sensor 120 and the fourth transceiver-based sensor 122.

Furthermore, at (304), the control logic 300 includes receiving first data from the third transceiver-based sensor. Specifically, as mentioned above, in several embodiments, the computing system 142 is communicatively coupled to the third transceiver-based sensor 120 via the communicative link 144. In this respect, as the fluid flows through the fluid conduit 102 (e.g., during the operation of the gas turbine engine 10), the computing system 142 may receive first data from the third transceiver-based sensor 120. Such first data may, in turn, be indicative of or associated with the downstream sensor signal received by the third transceiver-based sensor 120.

Additionally, at (306), the control logic 300 includes determining a first time-of-flight of the downstream sensor signal based on the first data. Specifically, in several embodiments, the computing system 142 is configured to determine a first time-of-flight of the downstream sensor signal based on the first data received at (304).

Moreover, at (308), the control logic 300 includes receiving second data from the fourth transceiver-based sensor. Specifically, as mentioned above, in several embodiments, the computing system 142 is communicatively coupled to the fourth transceiver-based sensor 122 via the communicative link 144. In this respect, as the fluid flows through the fluid conduit 102 (e.g., during the operation of the gas turbine engine 10), the computing system 142 may receive second data from the fourth transceiver-based sensor 122. Such second data may, in turn, be indicative of or associated with the downstream sensor signal received by the fourth transceiver-based sensor 122.

In addition, at (310), the control logic 300 includes determining a second time-of-flight of the downstream sensor signal based on the second data. Specifically, in several embodiments, the computing system 142 is configured to determine a second time-of-flight of the downstream sensor signal based on the second data received at (308).

As shown, at (312), the control logic 300 includes controlling the operation of the third transceiver-based sensor such that the third transceiver-based sensor emits an upstream sensor signal directed at the first transceiver-based sensor and the second transceiver-based sensor. Specifically, in several embodiments, the computing system 142 is configured to control the operation of the third transceiver-based sensor 120 such that the third transceiver-based sensor 120 emits an upstream sensor signal (e.g., the third sensor signal 130) directed at the first transceiver-based sensor 112 and the second transceiver-based sensor 114.

Furthermore, at (314), the control logic 300 includes receiving third data from the first transceiver-based sensor. Specifically, as mentioned above, in several embodiments, the computing system 142 is communicatively coupled to the first transceiver-based sensor 112 via the communicative link 144. In this respect, as the fluid flows through the fluid conduit 102 (e.g., during the operation of the gas turbine engine 10), the computing system 142 may receive third data from the first transceiver-based sensor 112. Such third data may, in turn, be indicative of or associated with the upstream sensor signal received by the first transceiver-based sensor 112.

Additionally, at (316), the control logic 300 includes determining a first time-of-flight of the upstream sensor signal based on the third data. Specifically, in several embodiments, the computing system 142 is configured to determine a first time-of-flight of the upstream sensor signal based on the third data received at (314).

Moreover, at (318), the control logic 300 includes receiving fourth data from the second transceiver-based sensor. Specifically, as mentioned above, in several embodiments, the computing system 142 is communicatively coupled to the second transceiver-based sensor 114 via the communicative link 144. In this respect, as the fluid flows through the fluid conduit 102 (e.g., during the operation of the gas turbine engine 10), the computing system 142 may receive fourth data from the second transceiver-based sensor 114. Such fourth data may, in turn, be indicative of or associated with the upstream sensor signal received by the second transceiver-based sensor 114.

In addition, at (320), the control logic 300 includes determining a second time-of-flight of the upstream sensor signal based on the fourth data. Specifically, in several embodiments, the computing system 142 is configured to determine a second time-of-flight of the upstream sensor signal based on the fourth data received at (308).

As shown in FIG. 3, at (322), the control logic 300 includes determining a first value of a flow parameter of the fluid flowing through a fluid conduit based on the determined first time-of-flight of the downstream sensor signal and the determined first time-of-flight of the upstream sensor signal. Specifically, in several embodiments, the computing system 142 is configured to determine a first value of the flow parameter (e.g., the flow rate) based on the first time-of-flight of the downstream sensor signal determined at (306) and the first time-of-flight of the upstream sensor signal determined at (316). For example, the computing system 142 may determine the first value of the flow parameter based on the difference between the first times-of-flight of the downstream sensor signal and the first upstream sensor signal. In some embodiments, the computing system 142 may use a look-up table stored within its memory device(s) 148 that correlates the difference in times-of-flight with a flow parameter value.

Furthermore, at (324), the control logic 300 includes determining a second value of the flow parameter of the fluid flowing through the fluid conduit based on the determined second time-of-flight of the downstream sensor signal and the determined second time-of-flight of the upstream sensor signal. Specifically, in several embodiments, the computing system 142 is configured to determine a second value of the flow parameter (e.g., the flow rate) based on the second time-of-flight of the downstream sensor signal determined at (310) and the second time-of-flight of the upstream sensor signal determined at (320). For example, the computing system 142 may determine the second value of the flow parameter based on the difference between the second times-of-flight of the downstream sensor signal and the upstream sensor signal. In some embodiments, the computing system 142 may use a look-up table stored within its memory device(s) 148 that correlates the difference in times-of-flight with a flow parameter value.

Additionally, as described above, in the control logic 300, two transceiver-based sensors receive a single sensor signal emitted by a single transceiver-based sensor. For example, in certain instances, the third and fourth transceiver-based sensors may receive the downstream sensor signal emitted by the first transceiver-based sensor. Thus, all of the transceiver-based sensors must operate under the same timing. As such, in some embodiments, the first, second, third, and fourth transceiver-based sensors 112, 114, 120, 122 apply a common timing parameter. That is, the computing system 142 uses the same timing to control all of the transceiver-based sensors 112, 114, 120, 122. In other embodiments, the computing system 142 may derive or otherwise determine the timing of some of the transceiver-based sensors (e.g., by using a phase-locked loop) for use in controlling the timing of the other transceiver-based sensors. For example, in certain instances, the computing system 142 is configured to determine a timing parameter for the first and third transceiver-based sensors 112, 120, such as for use in controlling the timing of the fourth transceiver-based sensor 122.

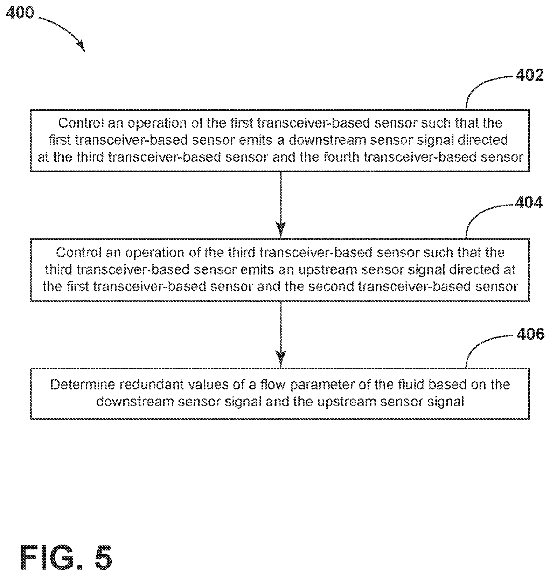

Referring now to FIG. 5, a flow diagram of one embodiment of a method 400 for monitoring fluid flow is illustrated in accordance with aspects of the present subject matter. In general, the method 400 will be described herein with reference to the gas turbine engine 10 and the apparatus 100 described above with reference to FIGS. 1-4. However, it should be appreciated by those of ordinary skill in the art that the disclosed method 400 may generally be implemented with any gas turbine engine having any suitable engine configuration and/or within any system having any suitable system configuration. In addition, although FIG. 5 depicts steps performed in a particular order for purposes of illustration and discussion, the methods discussed herein are not limited to any particular order or arrangement. One skilled in the art, using the disclosures provided herein, will appreciate that various steps of the methods disclosed herein can be omitted, rearranged, combined, and/or adapted in various ways without deviating from the scope of the present disclosure.

As shown in FIG. 5, at (402), the method 400 includes controlling, with a computing system, the operation of a first transceiver-based sensor such that the first transceiver-based sensor emits a downstream sensor signal directed at a third transceiver-based sensor and a fourth transceiver-based sensor. For instance, as described above, the computing system 142 may be configured to control the operation of the first transceiver-based sensor 112 such that the first transceiver-based sensor 112 emits a downstream sensor signal (e.g., the first sensor signal 126) directed at the third transceiver-based sensor 120 and the fourth transceiver-based sensor 122.

Furthermore, at (404), the method 400 includes controlling, with the computing system, the operation of the third transceiver-based sensor such that the third transceiver-based sensor emits an upstream sensor signal directed at the first transceiver-based sensor and a second transceiver-based sensor. For instance, as described above, the computing system 142 may be configured to control the operation of the third transceiver-based sensor 120 such that the third transceiver-based sensor 120 emits an upstream sensor signal (e.g., the third sensor signal 130) directed at the first transceiver-based sensor 112 and the second transceiver-based sensor 114.

Additionally, at (406), the method 400 includes determining, with the computing system, redundant values of a flow parameter of the fluid based on the downstream sensor signal and the upstream sensor signal. For instance, as described above, the computing system 142 may be configured to determine redundant values of a flow parameter (e.g., flow rate) of the fluid flow through the flow passage 106 of the fluid conduit 102 based on the downstream sensor signal emitted at (402) and the upstream sensor signal emitted at (404).

For example, in some embodiments, the method 400 allows the redundant flow measurement to be taken on the same volume of fuel flowing through the fuel line 84 of a gas turbine engine 10. That is, the apparatus 100 and the control logic 200 allow redundant transceiver-based (e.g., ultrasonic) measurement of flow parameters (e.g., flow rate) of the same volume of fuel, negating any differences in the redundant measurements caused by differences in flow dynamics along the length of the fuel line 84.

Determining redundant values of a flow parameter using sensor data generated by the first, second, third, and fourth transceiver-based sensors 112, 114, 120, 122 as described above improves the operation of the gas turbine engine 10. More specifically, in certain applications (e.g., aviation and aerospace applications), it is necessary to have redundant fluid flow sensors. For example, the first and third transceiver-based sensors 112, 120 may operate together to capture data for determining one flow measurement. Similarly, the second and fourth transceiver-based sensors 114, 122 may operate together to capture data for determining another flow measurement (e.g., a redundant flow measurement). In some embodiments of the disclosed apparatus 100 and method 400, multiple sensor signals having different signal parameter values (e.g., a first downstream sensor signal having a first signal parameter value and a second downstream sensor signal having a different, second signal parameter value) can be emitted at the same time. In other embodiments, a single sensor signal can be received by two different transceiver-based sensors (e.g., a single downstream signal can be received by the first and second transceiver-based sensors). As such, the disclosed apparatus 100 and method 400 allow for redundant values of a flow parameter of a fluid to be determined for the same portion of the flow passage at the same rate as a non-redundant system. Thus, the disclosed apparatus 100 and method 400 allow for redundant flow measurement in applications in which redundancy is important (e.g., aerospace and aviation applications) without reducing the sampling rate of the flow measurements, which could result in less efficient control of the gas turbine engine.

Further aspects are provided by the subject matter of the following clauses:

An apparatus for monitoring fluid flow, the apparatus comprising: a fluid conduit defining a flow passage through which a fluid flows; an upstream sensor assembly associated with the flow passage, the upstream sensor assembly including a first transceiver-based sensor and a second transceiver-based sensor; a downstream sensor assembly associated with the flow passage and positioned downstream of the upstream sensor assembly relative to a direction of flow of the fluid through the flow passage, the downstream sensor assembly including a third transceiver-based sensor and a fourth transceiver-based sensor; and a computing system communicatively coupled to the first transceiver-based sensor, the second transceiver-based sensor, the third transceiver-based sensor, and the fourth transceiver-based sensor, the computing system configured to: control an operation of the first transceiver-based sensor such that the first transceiver-based sensor emits a downstream sensor signal directed at the third transceiver-based sensor and the fourth transceiver-based sensor; control an operation of the third transceiver-based sensor such that the third transceiver-based sensor emits an upstream sensor signal directed at the first transceiver-based sensor and the second transceiver-based sensor; and determine redundant values of a flow parameter of the fluid based on the downstream sensor signal and the upstream sensor signal.

The apparatus of one or more clauses, wherein the downstream sensor signal corresponds to a first downstream sensor signal having a first signal parameter value, the computing system further configured to control the operation of the second transceiver-based sensor such that the second transceiver-based sensor emits a second downstream sensor signal having a second signal parameter value directed at the third transceiver-based sensor and the fourth transceiver-based sensor, the second signal parameter value being different than the first signal parameter value.

The apparatus of one or more clauses, wherein the first sensor signal parameter is a first waveform, and the second sensor signal parameter is a second waveform.

The apparatus of one or more clauses, wherein when determining the redundant values of the flow parameter, the computing system is further configured to: receive first data from the third transceiver-based sensor, the first data being associated with the first downstream sensor signal and the second downstream sensor signal received by the third transceiver-based sensor; filter out portions of the first data associated with the second downstream sensor signal; and determine a time-of-flight of the first downstream sensor signal based on a remaining portion of the first data.

The apparatus of one or more clauses, wherein when determining the redundant values of the flow parameter, the computing system is further configured to: receive second data from the fourth transceiver-based sensor, the second data being associated with the first downstream sensor signal and the second downstream sensor signal received by the fourth transceiver-based sensor; filter out portions of the second data associated with the first downstream sensor signal; and determine a time-of-flight of the second downstream sensor signal based on a remaining portion of the second data.

The apparatus of one or more clauses, wherein: when filtering out the portions of the first data, the computing system is configured to filter out portions of the first data associated with the first downstream sensor signal using a first correlation function, and when filtering out the portions of the second data, the computing system is configured to filter out portions of the second data associated with the second downstream sensor signal using a second correlation function.

The apparatus of one or more clauses, wherein the upstream sensor signal corresponds to a first upstream sensor signal having the first signal parameter value, the computing system further configured to control the operation of the fourth transceiver-based sensor such that the fourth transceiver-based sensor emits a second upstream sensor signal having the second signal parameter value directed at the first transceiver-based sensor and the second transceiver-based sensor.

The apparatus of one or more clauses, wherein when determining the redundant values of the flow parameter, the computing system is further configured to: receive third data from the first transceiver-based sensor, the third data being associated with the first upstream sensor signal and the second upstream sensor signal received by the first transceiver-based sensor; filter out portions of the third data associated with the second upstream sensor signal; and determine a time-of-flight of the first upstream sensor signal based on a remaining portion of the third data.

The apparatus of one or more clauses, wherein when determining the redundant values of the flow parameter, the computing system is further configured to: receive fourth data from the second transceiver-based sensor, the fourth data being associated with the first upstream sensor signal and the second upstream sensor signal received by the second transceiver-based sensor; filter out portions of the fourth data associated with the first upstream sensor signal; and determine a time-of-flight of the second upstream sensor signal based on a remaining portion of the second data.

The apparatus of one or more clauses, wherein when determining the redundant values of the flow parameter, the computing system is further configured to: determine a first value of the flow parameter based on the determined time-of-flight of the first downstream sensor signal and the determined time-of-flight of the first upstream sensor signal; and determine a second value of the flow parameter based on the determined time-of-flight of the second downstream sensor signal and the determined time-of-flight of the second upstream sensor signal.

The apparatus of one or more clauses, wherein when determining the redundant values of the flow parameter, the computing system is further configured to: receive first data from the third transceiver-based sensor, the first data being associated with the downstream sensor signal; determine a first time-of-flight of the downstream sensor signal based on the first data; receive second data from the fourth transceiver-based sensor, the second data being associated with the downstream sensor signal; and determine a second time-of-flight of the downstream sensor signal based on the first data.

The apparatus of one or more clauses, wherein when determining the redundant values of the flow parameter, the computing system is further configured to: receive third data from the first transceiver-based sensor, the third data being associated with the upstream sensor signal; determine a first time-of-flight of the upstream sensor signal based on the third data; receive fourth data from the second transceiver-based sensor, the fourth data being associated with the upstream sensor signal; and determine a second time-of-flight of the upstream sensor signal based on the fourth data.

The apparatus of one or more clauses, wherein when determining the redundant values of the flow parameter, the computing system is further configured to: determine a first value of the flow parameter based on the determined first time-of-flight of the downstream sensor signal and the determined first time-of-flight of the upstream sensor signal; and determine a second value of the flow parameter based on the determined second time-of-flight of the downstream sensor signal and the determined second time-of-flight of the upstream sensor signal.

The apparatus of one or more clauses, wherein the first transceiver-based sensor, the second transceiver-based sensor, the third transceiver-based sensor, and the fourth transceiver-based sensor apply a common timing parameter.

The apparatus of one or more clauses, wherein the computing system is configured to determine a timing parameter for a pair of the first transceiver-based sensor and the third transceiver-based sensor.

The apparatus of one or more clauses, wherein the first transceiver-based sensor, the second transceiver-based sensor, the third transceiver-based sensor, and the fourth transceiver-based sensor respectively comprise a first ultrasonic sensor, a second ultrasonic sensor, a third ultrasonic sensor, and a fourth ultrasonic sensor.

An apparatus for monitoring fuel flow associated with a gas turbine engine, the apparatus comprising: a fuel conduit defining a flow passage through which a fuel flows; an upstream sensor assembly associate with the flow passage, the upstream sensor assembly including a first ultrasonic sensor and a second ultrasonic sensor; a downstream sensor assembly associated with the flow passage and downstream of the upstream sensor assembly relative to a direction of flow of the fuel through the flow passage, the downstream sensor assembly including a third ultrasonic sensor and a fourth ultrasonic sensor; and a computing system communicatively coupled to the first ultrasonic sensor, the second ultrasonic sensor, the third ultrasonic sensor, and the fourth ultrasonic sensor, the computing system configured to: control an operation of the first ultrasonic such that the first ultrasonic emits a downstream sensor signal directed at the third ultrasonic sensor and the fourth ultrasonic sensor; control an operation of the third ultrasonic sensor such that the third ultrasonic sensor emits an upstream sensor signal directed at the first ultrasonic sensor and the second ultrasonic sensor; and determine redundant values of a flow parameter of the fuel based on the downstream sensor signal and the upstream sensor signal.

A method for monitoring fluid flow with a fluid conduit defining a flow passage through which a fluid flows using an upstream sensor assembly positioned within the flow passage and a downstream sensor assembly positioned within the flow passage downstream of the upstream sensor assembly relative to a direction of flow of the fluid through the flow passage, the upstream sensor assembly including a first transceiver-based sensor and a second transceiver-based sensor, the downstream sensor assembly including a third transceiver-based sensor and a fourth transceiver-based sensor, the method comprising: controlling, with a computing system, an operation of the first transceiver-based sensor such that the first transceiver-based sensor emits a downstream sensor signal directed at the third transceiver-based sensor and the fourth transceiver-based sensor; controlling, with the computing system, an operation of the third transceiver-based sensor such that the third transceiver-based sensor emits an upstream sensor signal directed at the first transceiver-based sensor and the second transceiver-based sensor; and determining, with the computing system, redundant values of a flow parameter of the fluid based on the downstream sensor signal and the upstream sensor signal.

The method of one or more clauses, wherein the downstream sensor signal corresponds to a first downstream sensor signal having a first signal parameter value, the method further comprising: controlling, with the computing system, the operation of the second transceiver-based sensor such that the second transceiver-based sensor emits a second downstream sensor signal having a second signal parameter value directed at the third transceiver-based sensor and the fourth transceiver-based sensor, the second signal parameter value being different than the first signal parameter value.

The method of one or more clauses, wherein the first sensor signal parameter is a first waveform, and the second sensor signal parameter is a second waveform.

This written description uses examples to disclose the present disclosure, including the best mode, and also to enable any person skilled in the art to practice the disclosure, including making and using any devices or systems and performing any incorporated methods. The patentable scope of the disclosure is defined by the claims and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. An apparatus for monitoring fluid flow, the apparatus comprising:
a fluid conduit defining a flow passage through which a fluid flows;
an upstream sensor assembly associated with the flow passage, the upstream sensor assembly including a first transceiver-based sensor and a second transceiver-based sensor;
a downstream sensor assembly associated with the flow passage and positioned downstream of the upstream sensor assembly relative to a direction of flow of the fluid through the flow passage, the downstream sensor assembly including a third transceiver-based sensor and a fourth transceiver-based sensor; and
a computing system communicatively coupled to the first transceiver-based sensor, the second transceiver-based sensor, the third transceiver-based sensor, and the fourth transceiver-based sensor, the computing system configured to:
control an operation of the first transceiver-based sensor such that the first transceiver-based sensor emits a downstream sensor signal directed at the third transceiver-based sensor and the fourth transceiver-based sensor;
control an operation of the third transceiver-based sensor such that the third transceiver-based sensor emits an upstream sensor signal directed at the first transceiver-based sensor and the second transceiver-based sensor; and
determine redundant values of a flow parameter of the fluid based on the downstream sensor signal and the upstream sensor signal.

2. The apparatus of claim 1, wherein the downstream sensor signal corresponds to a first downstream sensor signal having a first signal parameter value, the computing system further configured to control the operation of the second transceiver-based sensor such that the second transceiver-based sensor emits a second downstream sensor signal having a second signal parameter value directed at the third transceiver-based sensor and the fourth transceiver-based sensor, the second signal parameter value being different than the first signal parameter value.

3. The apparatus of claim 2, wherein the first sensor signal parameter is a first waveform, and the second sensor signal parameter is a second waveform.

4. The apparatus of claim 2 or 3, wherein when determining the redundant values of the flow parameter, the computing system is further configured to:
receive first data from the third transceiver-based sensor, the first data being associated with the first downstream sensor signal and the second downstream sensor signal received by the third transceiver-based sensor;
filter out portions of the first data associated with the second downstream sensor signal; and
determine a time-of-flight of the first downstream sensor signal based on a remaining portion of the first data.

5. The apparatus of claim 4, wherein when determining the redundant values of the flow parameter, the computing system is further configured to:
receive second data from the fourth transceiver-based sensor, the second data being associated with the first downstream sensor signal and the second downstream sensor signal received by the fourth transceiver-based sensor;
filter out portions of the second data associated with the first downstream sensor signal; and
determine a time-of-flight of the second downstream sensor signal based on a remaining portion of the second data.

6. The apparatus of claim 5, wherein:
when filtering out the portions of the first data, the computing system is configured to filter out portions of the first data associated with the first downstream sensor signal using a first correlation function, and
when filtering out the portions of the second data, the computing system is configured to filter out portions of the second data associated with the second downstream sensor signal using a second correlation function.

7. The apparatus of claim 5 or 6, wherein the upstream sensor signal corresponds to a first upstream sensor signal having the first signal parameter value, the computing system further configured to control the operation of the fourth transceiver-based sensor such that the fourth transceiver-based sensor emits a second upstream sensor signal having the second signal parameter value directed at the first transceiver-based sensor and the second transceiver-based sensor.

8. The apparatus of claim 7, wherein when determining the redundant values of the flow parameter, the computing system is further configured to:
receive third data from the first transceiver-based sensor, the third data being associated with the first upstream sensor signal and the second upstream sensor signal received by the first transceiver-based sensor;
filter out portions of the third data associated with the second upstream sensor signal; and
determine a time-of-flight of the first upstream sensor signal based on a remaining portion of the third data.

9. The apparatus of claim 8, wherein when determining the redundant values of the flow parameter, the computing system is further configured to:
receive fourth data from the second transceiver-based sensor, the fourth data being associated with the first upstream sensor signal and the second upstream sensor signal received by the second transceiver-based sensor;
filter out portions of the fourth data associated with the first upstream sensor signal; and
determine a time-of-flight of the second upstream sensor signal based on a remaining portion of the second data.

10. The apparatus of claim 9, wherein when determining the redundant values of the flow parameter, the computing system is further configured to:
determine a first value of the flow parameter based on the determined time-of-flight of the first downstream sensor signal and the determined time-of-flight of the first upstream sensor signal; and
determine a second value of the flow parameter based on the determined time-of-flight of the second downstream sensor signal and the determined time-of-flight of the second upstream sensor signal.

11. The apparatus of any of claims 2 to 10, wherein when determining the redundant values of the flow parameter, the computing system is further configured to:
receive first data from the third transceiver-based sensor, the first data being associated with the downstream sensor signal;
determine a first time-of-flight of the downstream sensor signal based on the first data;
receive second data from the fourth transceiver-based sensor, the second data being associated with the downstream sensor signal; and
determine a second time-of-flight of the downstream sensor signal based on the first data.

12. The apparatus of claim 11, wherein when determining the redundant values of the flow parameter, the computing system is further configured to:
receive third data from the first transceiver-based sensor, the third data being associated with the upstream sensor signal;
determine a first time-of-flight of the upstream sensor signal based on the third data;
receive fourth data from the second transceiver-based sensor, the fourth data being associated with the upstream sensor signal; and
determine a second time-of-flight of the upstream sensor signal based on the fourth data.

13. The apparatus of claim 12, wherein when determining the redundant values of the flow parameter, the computing system is further configured to:
determine a first value of the flow parameter based on the determined first time-of-flight of the downstream sensor signal and the determined first time-of-flight of the upstream sensor signal; and
determine a second value of the flow parameter based on the determined second time-of-flight of the downstream sensor signal and the determined second time-of-flight of the upstream sensor signal.

14. An apparatus for monitoring fuel flow associated with a gas turbine engine, the apparatus comprising:
a fuel conduit defining a flow passage through which a fuel flows;
an upstream sensor assembly associated with the flow passage, the upstream sensor assembly including a first ultrasonic sensor and a second ultrasonic sensor;
a downstream sensor assembly associated with the flow passage and downstream of the upstream sensor assembly relative to a direction of flow of the fuel through the flow passage, the downstream sensor assembly including a third ultrasonic sensor and a fourth ultrasonic sensor; and
a computing system communicatively coupled to the first ultrasonic sensor, the second ultrasonic sensor, the third ultrasonic sensor, and the fourth ultrasonic sensor, the computing system configured to:
control an operation of the first ultrasonic such that the first ultrasonic emits a downstream sensor signal directed at the third ultrasonic sensor and the fourth ultrasonic sensor;
control an operation of the third ultrasonic sensor such that the third ultrasonic sensor emits an upstream sensor signal directed at the first ultrasonic sensor and the second ultrasonic sensor; and
determine redundant values of a flow parameter of the fuel based on the downstream sensor signal and the upstream sensor signal.

15. A method for monitoring fluid flow with a fluid conduit defining a flow passage through which a fluid flows using an upstream sensor assembly positioned within the flow passage and a downstream sensor assembly positioned within the flow passage downstream of the upstream sensor assembly relative to a direction of flow of the fluid through the flow passage, the upstream sensor assembly including a first transceiver-based sensor and a second transceiver-based sensor, the downstream sensor assembly including a third transceiver-based sensor and a fourth transceiver-based sensor, the method comprising:
controlling, with a computing system, an operation of the first transceiver-based sensor such that the first transceiver-based sensor emits a downstream sensor signal directed at the third transceiver-based sensor and the fourth transceiver-based sensor;
controlling, with the computing system, an operation of the third transceiver-based sensor such that the third transceiver-based sensor emits an upstream sensor signal directed at the first transceiver-based sensor and the second transceiver-based sensor; and
determining, with the computing system, redundant values of a flow parameter of the fluid based on the downstream sensor signal and the upstream sensor signal.
